# EUROPÄISCHE PATENTSCHRIFT

(11) **EP 2 530 826 B1**
(45) Veröffentlichungstag und Bekanntmachung des Hinweises auf die Patenterteilung: **25.03.2020**
(21) Anmeldenummer: 12167452.7
(22) Anmeldetag: 10.05.2012
(51) Int. Cl.: H02P 1/26, H02P 9/48

(54) **Verfahren zur Reduzierung des Anlaufstromes bei einer mit Blockkommutierung betriebenen mehrphasigen Maschine**
Method for reducing the starting current for a multi-phase machine operated with block commutation
Procédé de réduction du courant de démarrage au niveau d'une machine polyphasée actionnée par bloc de commutation

(30) Priorität: 30.05.2011 DE 102011076667
(43) Veröffentlichungstag der Anmeldung: 05.12.2012
(73) Patentinhaber: ROBERT BOSCH GMBH, 70442 Stuttgart (DE)
(72) Erfinder: Mehringer, Paul, 70569 Stuttgart (DE); Baur, Markus, 72108 Rottenburg (DE); Kurfiss, Jochen, 75417 Lomersheim (DE)

(56) Entgegenhaltungen:
- DE-A1- 19 860 448
- DE-A1-102004 001 932
- DE-A1-102005 026 439
- DE-A1-102007 058 910
- DE-A1-102008 032 210
- DE-A1-102008 042 352
- DE-C1- 4 310 260
- DE-T2- 69 732 119
- US-A- 5 418 436
- US-A1- 2010 072 926
- US-A1- 2011 057 595

## Beschreibung

Die Erfindung betrifft ein Verfahren zur Reduzierung des Anlaufstromes einer mit Blockkommutierung betriebenen mehrphasigen Maschine, insbesondere eine Maschine, die mehr als drei Phasen aufweist.

### Stand der Technik

Es ist bekannt, zum Starten eines Kraftfahrzeugs einen riemengetriebenen Startergenerator zu verwenden. Dieser weist einen zwischen der Batterie des Kraftfahrzeugs und der Maschine angeordneten Wechselrichter auf. Bei dem Wechselrichter handelt es sich um eine Leistungselektronik, welche Highside-Schalter und Lowside-Schalter enthält. Die Maschine ist im motorischen Betrieb und im generatorischen Betrieb betreibbar.

Bei einem Start des motorischen Betriebs erfolgt ein Anlauf des Verbrennungsmotors des Kraftfahrzeugs bei stillstehendem Fahrzeug.

Eine einfache und bekannte Ansteuermethode für die Schalter der Leistungselektronik ist eine sogenannte Blockkommutierung. Ein Vorteil dieser Ansteuermethode besteht darin, dass es keiner oder allenfalls kleiner Zwischenkreiskapazitäten bedarf. Große Zwischenkreiskapazitäten, die für eine PWM-Kommutierung erforderlich sind, benötigen einen großen Bauraum und sind bezüglich einer Schüttelbeanspruchung und einer thermischen Beanspruchung sehr empfindlich. Ein Nachteil einer Blockkommutierung besteht darin, dass hohe Anlaufströme auftreten, die sich auf die Auslegung der Elektronik und der Aufbau- und Verbindungstechnik nachteilig auswirken.

Die DE 10 2008 042 352 A1 zeigt eine Gleichrichter-Brückenschaltung zum Gleichrichten der von einem Generator erzeugten Phasenspannung, umfassend eine positive Halbbrücke mit mehreren Gleichrichterelementen, und eine negative Halbbrücke mit mehreren Gleichrichterelementen, wobei die Gleichrichterelemente jeweils einen steuerbaren Schalter mit einer parallel geschalteten Diode umfassen. Dabei ist eine Ansteuerschaltung zum Ein-/Ausschalten der Schalter vorgesehen, wobei sich die Einschaltzeit und/oder die Ausschaltzeit des Schalters anhand eines Kennfeldes oder einer mathematischen Funktion berechnen.

Aus der US 7,504,790 B2 ist es bereits bekannt, bei niedrigen Drehzahlen eine PWM und bei hohen Drehzahlen eine Blockkommutierung zu verwenden. Dies eröffnet die Möglichkeit, durch eine hochfrequente Taktung den Anlaufstrom zu begrenzen. Nachteilig dabei ist jedoch die Notwendigkeit eines Zwischenkreiskondensators mit vergleichsweise großer Kapazität.

Aus der US 6,577,097 B2 ist es bereits bekannt, eine Umschaltung zwischen einer 120°-Ansteuerung und einer 180°-Ansteuerung vorzunehmen. Dabei entfällt zwar die Notwendigkeit eines Zwischenkreiskondensators großer Kapazität, doch besteht das Problem, dass der Anlaufstrom bei stehendem bzw. langsam losdrehendem Verbrennungsmotor, d. h. bei einer im Bereich zwischen 0 Umdrehungen pro Minute und ca. 400 Umdrehungen pro Minute liegenden Kurbelwellendrehzahl, sehr hoch ist. Dies hat zur Folge, dass die Belastung der Endstufen ebenfalls hoch ist. Um eine durch die hohe Belastung verursachte Zerstörung der Endstufen zu vermeiden, müssen die Endstufen an diese hohe Belastung durch eine geeignete Dimensionierung angepasst werden. Dadurch sind die Endstufen aber für alle weiteren Betriebspunkte überdimensioniert. Ein weiterer Nachteil besteht darin, dass aufgrund der hohen Ströme, die in der Anlaufphase fließen, bei der Spannungsversorgung des Bordnetzes ungewünschte Spannungseinbrüche auftreten können. Bei blockkommutierten Systemen existiert keine Möglichkeit, die genannten hohen Ströme durch eine hochfrequente Taktung, beispielsweise mit 16 KHz, zu reduzieren, da hierfür kein Zwischenkreiskondensator mit ausreichender Kapazität zur Verfügung steht.

Im Hochlauf eines blockkommutierten riemengetriebenen Startergenerators oder einer anderen elektrischen Maschine kommt es zu hohen Anlaufströmen, die sich mit steigender Drehzahl aufgrund der steigenden Gegeninduktion reduzieren. Dies führt vor allem bei niedrigen Drehzahlen zu hohen Anlaufströmen, da dabei nur der ohmsche Widerstand des Generators wirksam ist. Nachteilig dabei ist die thermische Belastung der verwendeten Endstufen bei kleinen Drehzahlen. Die Endstufen müssen für diesen Startfall ausgelegt sein und sind folglich für die weiteren Betriebspunkte überdimensioniert. Des Weiteren führen die sehr hohen Anlaufströme bei der Spannungsversorgung zu unerwünschten Spannungseinbrüchen im Bordnetz des jeweiligen Kraftfahrzeugs.

Ferner entsteht im Falle eines Startabbruches bedingt durch ein Fehlverhalten des Systems ein hoher negativer Stromgradient in der Generatorzuleitung. Aufgrund der Eigeninduktivität der Zuleitung wird eine hohe Überspannung im System erzeugt. Diese belastet das Bordnetz, so dass alle Verbraucher gegen diese Überspannungen geschützt werden müssen. Des Weiteren werden als Schalter verwendete Power MOS-FETs durch die genannte hohe Überspannung in den Avalanche-Durchbruch getrieben. Auch die Ansteuerelektronik muss gegen die genannte hohe Überspannung geschützt werden.

Ferner kann eine Drehzahlbegrenzung bzw. eine Drehzahlregelung im reinen Blockbetrieb nur dadurch erfolgen, dass der Winkeloffset zwischen dem Rotormagnetfeld und dem Statormagnetfeld kleiner als 90° gewählt wird. In diesem Falle bleibt zwar die elektrische Leistung der Maschine in erster Näherung gleich, doch sinkt die Abgabeleistung der Maschine. Folglich sinkt auch deren Wirkungsgrad.

Vor allem bei blockkommutierten Systemen besteht keine Möglichkeit, die auftretenden hohen Anlaufströme durch eine geeignete Taktung der jeweiligen Endstufe zu reduzieren.

### Offenbarung der Erfindung

Ein Verfahren mit den im Anspruch 1 angegebenen Merkmalen weist demgegenüber den Vorteil auf, dass der Anlaufstrom einer mit Blockkommutierung betriebenen mehrphasigen Maschine reduziert ist. Diese Vorteile werden dadurch erreicht, dass bei einem Verfahren zur Stromregelung einer mit Blockkommutierung betriebenen mehrphasigen Maschine, welche Phasenwicklungen und pro Phase einen Highside-Schalter und einen Lowside-Schalter aufweist, zur Stromregelung die Ansteuerung der Schalter mittels eines Ansteuerschemas erfolgt, durch das eine gestufte Anpassung des Blockkommutierungswinkels vorgenommen wird.

Ein Verfahren gemäß der Erfindung wird vorzugsweise beim Vorliegen eines fünfphasigen Generators mit Drudenfußverschaltung verwendet. Bei Verwendung eines erfindungsgemäßen Verfahrens können unter bestimmten Voraussetzungen in Form von Elkos realisierte Zwischenkreiskondensatoren entfallen. Aufgrund der erzielten Begrenzung der Anlaufströme können die Endstufen günstiger dimensioniert werden, da für die Dimensionierung der Endstufen der Anlaufstrom das relevante Auslegungskriterium ist. Bei höheren Drehzahlen begrenzen sich die Ströme selbstständig.

Ein weiterer Vorteil der Erfindung besteht darin, dass der Wirkungsgrad einer mit Blockkommutierung betriebenen mehrphasigen Maschine je nach Ansteuerschema im Vergleich zu der oben genannten Reduzierung des Kommutierungswinkels je nach Bereich stark erhöht werden kann.

Ein Verfahren gemäß der Erfindung wird - wie bereits oben ausgeführt wurde - vorzugsweise bei fünfphasigen Maschinen mit Drudenfußverschaltung eingesetzt, kann aber auch bei anderen mehrphasigen Systemen, deren Phasenzahl größer ist als 3, verwendet werden. Mit steigender Phasenzahl bieten mehrphasige Systeme zunehmend mehr Möglichkeiten zu einer Reduzierung der auftretenden Ströme.

Weitere vorteilhafte Eigenschaften der Erfindung ergeben sich aus der nachfolgenden Erläuterung von Ausführungsbeispielen anhand der Zeichnung. Es zeigt
- Figur 1: eine Skizze zur Veranschaulichung einer fünfphasigen Maschine mit Drudenfußverschaltung,
- Figur 2: eine Skizze zur Veranschaulichung zugehöriger Magnetfeldvektoren,
- Figur 3: mehrere Skizzen zur Erläuterung des Zusammenhangs zwischen einem Ansteuermuster und dem resultierenden Anlaufstrom, in welchen die Drudenfußverschaltung jeweils im aufgewickelten Zustand dargestellt ist,
- Figur 4: mehrere Skizzen zur Veranschaulichung von Ansteuermustern mit resultierenden Strom- und Magnetfeldvektoren bei fünfphasigen Systemen,
- Figur 5: ein winkelabhängiges Ablaufdiagramm bei einer 72°-Blockkommutierung,
- Figur 6: ein winkelabhängiges Ablaufdiagramm bei einer 108°-Blockkommutierung,
- Figur 7: ein winkelabhängiges Ablaufdiagramm bei einer 144°-Blockkommutierung,
- Figur 8: ein winkelabhängiges Ablaufdiagramm bei einer 180°-Blockkommutierung und
- Figur 9: eine Skizze einer fünfphasigen Maschine zur Erläuterung einer Weiterbildung der Erfindung.

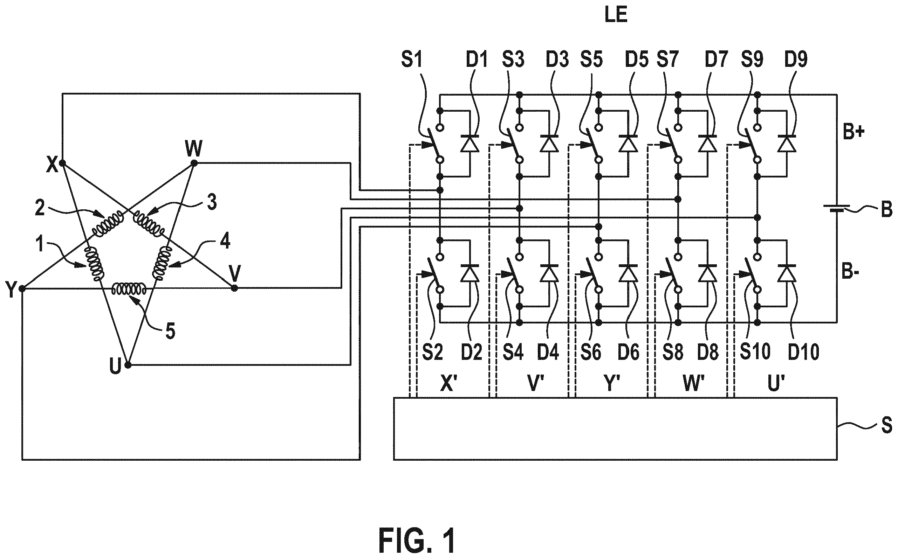

Die Figur 1 zeigt als ein Ausführungsbeispiel für die Erfindung eine Drudenfußverschaltung für eine fünfphasige Maschine. Als Drudenfußverschaltung wird ein Verschaltungstyp verstanden, bei dem die insgesamt fünf Phasenwicklungen der Schaltung elektrisch derart miteinander verbunden sind, dass die Form des Schaltbildes ein Pentagramm ergibt. Bei der gezeigten fünfphasigen Maschine handelt es sich beispielsweise um einen riemengetriebenen Startergenerator.

Die gezeigte Maschine weist eine zwischen Phasenanschlüssen U und X vorgesehene Phasenwicklung 1, eine zwischen Phasenanschlüssen Y und W vorgesehene Phasenwicklung 2, eine zwischen Phasenanschlüssen X und V vorgesehene Phasenwicklung 3, eine zwischen Phasenanschlüssen U und W vorgesehene Phasenwicklung 4, eine zwischen Phasenanschlüssen Y und V vorgesehene Phasenwicklung 5, eine mit den Phasenanschlüssen verbundene Leistungselektronik LE und eine Batterie B auf. Die Batterie B hat einen Pluspol B+ und einen Minuspol B-.

Die Leistungselektronik LE enthält fünf Zweige X', V', Y', W' und U', von denen jeder eine Reihenschaltung zweier Schalter aufweist, wobei jedem dieser Schalter eine Diode antiparallel geschaltet ist. Diese Anordnung ergibt sich bei der Verwendung von herkömmlichen Feldeffekttransistoren als Schalter, da diese eine Inversdiode beinhalten. Grundsätzlich ist jedoch auch die Verwendung von anderen Schaltelementen, beispielsweise IGBTs, möglich.

Der Zweig X' der Leistungselektronik LE ist an einem Verbindungspunkt zwischen den beiden Schaltern S1 und S2 mit dem Phasenanschluss X des Ständers des Startergenerators verbunden. Der Schalter S1 des Zweigs X' ist ein Highside-Schalter. Antiparallel zum Schalter S1 ist eine Diode D1 geschaltet. Der Schalter S2 des Zweigs X' ist ein Lowside-Schalter. Antiparallel zum Schalter S2 ist eine Diode D2 geschaltet. Die Schalter S1 und S2 werden von einer Steuereinheit S angesteuert.

Der Zweig V' der Leistungselektronik LE ist an einem Verbindungspunkt zwischen den beiden Schaltern S3 und S4 mit dem Phasenanschluss V des Ständers des Startergenerators verbunden. Der Schalter S3 des Zweigs V' ist ein Highside-Schalter. Antiparallel zum Schalter S3 ist eine Diode D3 geschaltet. Der Schalter S4 des Zweigs V' ist ein Lowside-Schalter. Antiparallel zum Schalter S4 ist eine Diode D4 geschaltet. Die Schalter S3 und S4 werden ebenfalls von der Steuereinheit S angesteuert.

Der Zweig Y' der Leistungselektronik LE ist an einen Verbindungspunkt zwischen den beiden Schaltern S5 und S6 mit dem Phasenanschluss Y des Ständers des Startergenerators verbunden. Der Schalter S5 des Zweigs Y' ist ein Highside-Schalter. Antiparallel zum Schalter S5 ist eine Diode D5 geschaltet. Der Schalter S6 des Zweigs Y' ist ein Lowside-Schalter. Antiparallel zum Schalter S6 ist eine Diode D6 geschaltet. Die Schalter S5 und S6 werden ebenfalls von der Steuereinheit S angesteuert.

Der Zweig W' der Leistungselektronik LE ist an einen Verbindungspunkt zwischen den Schaltern S7 und S8 mit dem Phasenanschluss W des Ständers des Startergenerators verbunden. Der Schalter S7 des Zweigs W' ist ein Highside-Schalter. Antiparallel zum Schalter S7 ist eine Diode D7 geschaltet. Der Schalter S8 des Zweigs W' ist ein Lowside-Schalter. Antiparallel zum Schalter S8 ist eine Diode D8 geschaltet. Die Schalter S7 und S8 werden ebenfalls von der Steuereinheit S8 angesteuert.

Der Zweig U' der Leistungselektronik LE ist an einen Verbindungspunkt zwischen den beiden Schaltern S9 und S10 mit dem Phasenanschluss U des Ständers des Startergenerators verbunden. Der Schalter S9 des Zweigs U' ist ein Highside-Schalter. Antiparallel zum Schalter S9 ist eine Diode D9 geschaltet. Der Schalter S10 des Zweigs U' ist ein Lowside-Schalter. Antiparallel zum Schalter S10 ist eine Diode D10 geschaltet. Die Schalter S9 und S10 werden ebenfalls von der Steuereinheit S angesteuert.

Im Startbetrieb wird der Batterie entnommene Leistung in das System eingespeist und in mechanische Energie umgesetzt. Im Gleichrichterbetrieb erfolgt der Energiefluss von den Phasenwicklungen des Ständers über die als Gleichrichter wirkende Leistungselektronik LE zur Batterie B und zu den in der Figur 1 nicht dargestellten Verbrauchern des Bordnetzes.

Im Startbetrieb muss durch eine geeignete Ansteuerung der Ständerwicklungen ein sich drehender Magnetfeldvektor erzeugt werden, der auf den nicht gezeichneten Läufer der Maschine ein Drehmoment ausübt. Zu einem bestimmten Zeitpunkt wird ein stehender Magnetfeldvektor erzeugt, der sich aus der Überlagerung der einzelnen Stromflüsse der beteiligten Ständerwicklungen ergibt. Zu diesem Zweck werden die Schalter S1 bis S10 der Leistungselektronik LE unter Verwendung von Ansteuermustern, die in Form von Strom- bzw. senkrecht darauf stehenden Magnetfeldvektoren beschrieben werden können, durch die Steuereinheit S angesteuert.

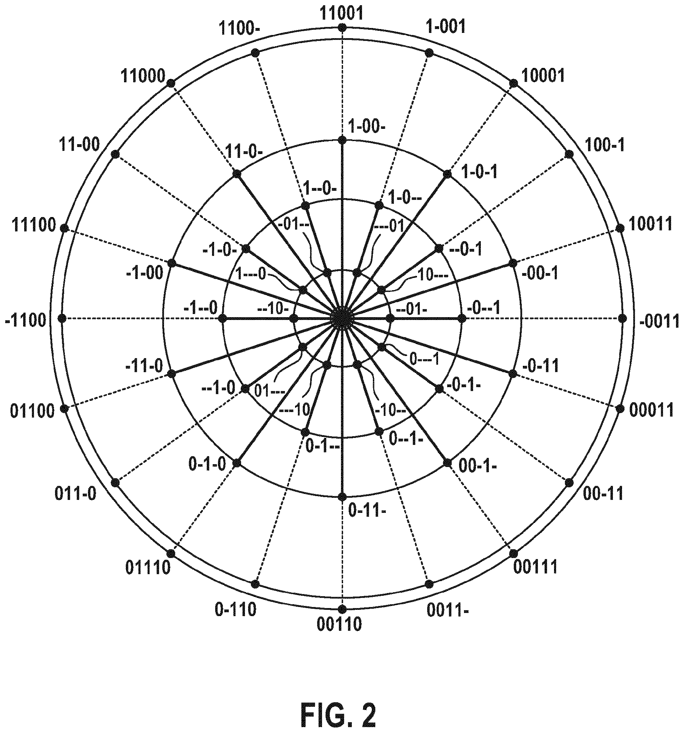

Die Figur 2 zeigt eine Skizze zur Veranschaulichung von Magnetfeldvektoren, die bei der in der Figur 1 gezeigten Maschine auftreten können. Hierbei bezeichnet der Abstand zum Mittelpunkt die Amplitude des Magnetfeldvektors, der Winkel zeigt den Winkel des eingestellten Magnetfeldvektors. Die jeweilige Ansteuerung wird durch einen Zifferncode bezeichnet. Beispielsweise bedeutet der Zifferncode "10010", dass die Phase U nach Highside , die Phase V nach Lowside, die Phase W nach Lowside, die Phase X nach Highside und die Phase Y nach Lowside durchgesteuert ist. Allgemein bedeutet "1" eine Durchsteuerung des HS-Zweigs, "0" eine Durchsteuerung des LS-Zweigs, und "--", dass weder HS- noch LS-Zweig durchgesteuert sind. Die Positionen innerhalb des Zifferncodes bezeichnen die jeweilige Phase, also 1. Position steht für 'U', usw. Man erkennt nun, dass durch entsprechende Ansteuermuster mehrere Ständerwicklungen in Reihe geschaltet werden können, um den Batteriestrom bei niedrigen Drehzahlen zu begrenzen. Andererseits können mehrere Ständerwicklungen parallel geschaltet werden, um den Batteriestrom bei hohen Drehzahlen auf höheren Werten zu halten.

Die nachfolgende Tabelle gibt einen Überblick über die verwendeten Ansteuermuster:

| U | V | W | X | Y | Winkel | Amplitude Magnetfeld [a.u.] | I_Bat [U_Bat/R_Strang] | Verhältnis Ampl/I_Bat | I_Endst [U_Bat/R_Strang] |
|---|---|---|---|---|---|---|---|---|---|
| -- | 0 | -- | -- | 1 | 0° | 1,25 | 1,25 | 1 | 1,25 |
| -- | 0 | -- | 1 | 1 | -18° | 1,90 | 2,00 | 0,95 | 2,00 |
| 0 | 0 | -- | 1 | 1 | -36° | 2,93 | 3,50 | 0,84 | 2,00 |
| 0 | 0 | 0 | 1 | 1 | -18° | 3,08 | 4,00 | 0,77 | 2,00 |
| 1 | 0 | -- | -- | -- | 36° | 0,52 | 0,83 | 0,62 | 0,83 |
| 1 | 0 | -- | -- | 0 | 90° | 0,36 | 1,00 | 0,36 | 1,00 |
| 1 | -- | 0 | -- | 0 | 82° | 1,08 | 1,33 | 0,81 | 1,33 |
| 1 | 0 | 0 | -- | -- | 64° | 1,26 | 1,50 | 0,84 | 1,50 |
| 1 | 0 | 0 | 1 | -- | 18° | 1,18 | 2,00 | 0,59 | 1,00 |
| 1 | 0 | 1 | 0 | -- | 108° | 0,69 | 1,50 | 0,46 | 1,00 |
| 1 | 0 | 0 | 0 | -- | 108° | 1,90 | 1,50 | 1,27 | 1,00 |
| 1 | 0 | -- | 0 | 0 | 108° | 1,26 | 1,50 | 0,84 | 1,00 |
| 0 | 0 | 0 | 0 | 1 | 18° | 1,90 | 2,00 | 0,95 | 2,00 |
| 1 | 0 | 1 | 0 | 1 | 54° | 1,18 | 2,00 | 0,59 | 1,00 |

Anwendungsmöglichkeiten für ein Verfahren gemäß der Erfindung liegen - wie oben bereits ausgeführt wurde - bei riemengetriebenen Startergeneratoren und des Weiteren auch bei motorischen Antrieben im Allgemeinen und auch bei sogenannten Boost-Rekuperationssystemen (BRS-Systemen) vor.

Im Vergleich zu bekannten Ansteuermustern wird durch die Verwendung von Ansteuermustern gemäß der Erfindung bzw. durch eine gestufte Anpassung des Blockkommutierungswinkels eine weitere Reduzierung der Strombelastung für die Kraftfahrzeugbatterie und die Endstufen im Anlauf der elektrischen Maschine erreicht.

Eine vorteilhafte Weiterbildung der Erfindung besteht darin, in Abweichung zur obigen Tabelle eine weitere Reduzierung des Anlaufstromes durch eine Berücksichtigung der im System vorhandenen Widerstände vorzunehmen. Dies soll im folgenden erläutert werden. Dabei wird davon ausgegangen, dass als Randbedingungen folgende Bordnetzkonstellation vorliegt:
- der Batteriewiderstand Rbatt beträgt 0,04 Ohm,
- der Zuleitungswiderstand Rzul beträgt 0,005 Ohm,
- der Durchlasswiderstand der verwendeten Schalteinheiten Recu beträgt 0,005 Ohm,
- der Strangwiderstand Rstrang beträgt 0,038 Ohm,
- die Batteriespannung Ubatt beträgt 42 V.

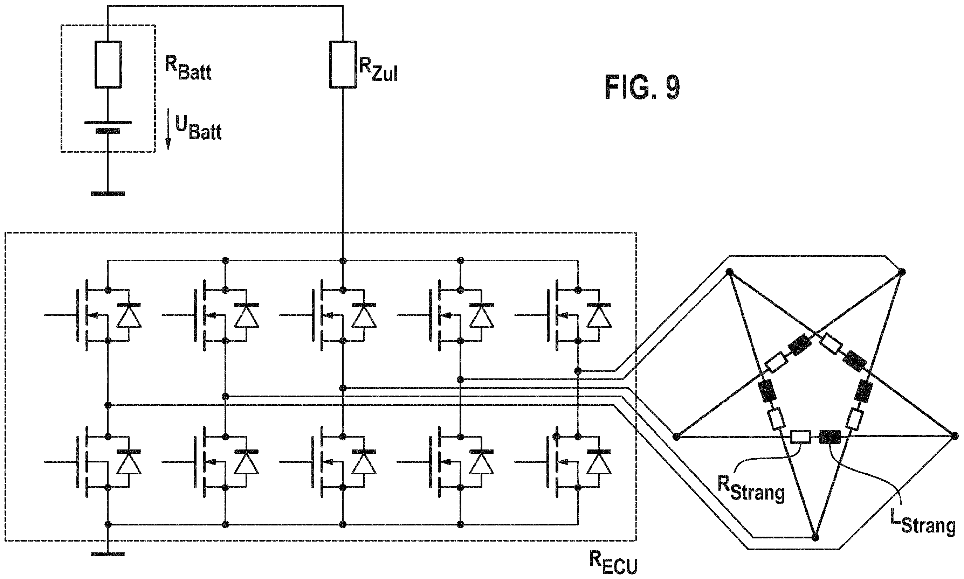

Zur Veranschaulichung der vorstehend angegebenen Weiterbildung wird auf die Figur 9 hingewiesen, in welcher eine fünfphasige Maschine gezeigt ist, in welcher die vorstehend angegebenen Widerstände des Systems dargestellt sind.

Daraus ergeben sich folgende Batterieströme in Abhängigkeit von der Kommutierung:

| Batteriestrom [A] | Kommutierung |
|---|---|
| 700 | 11100 |
| 610 | 1-00- |
| 520 | 1-1-- |
| 480 | 101-- |
| 420 | 10--- |

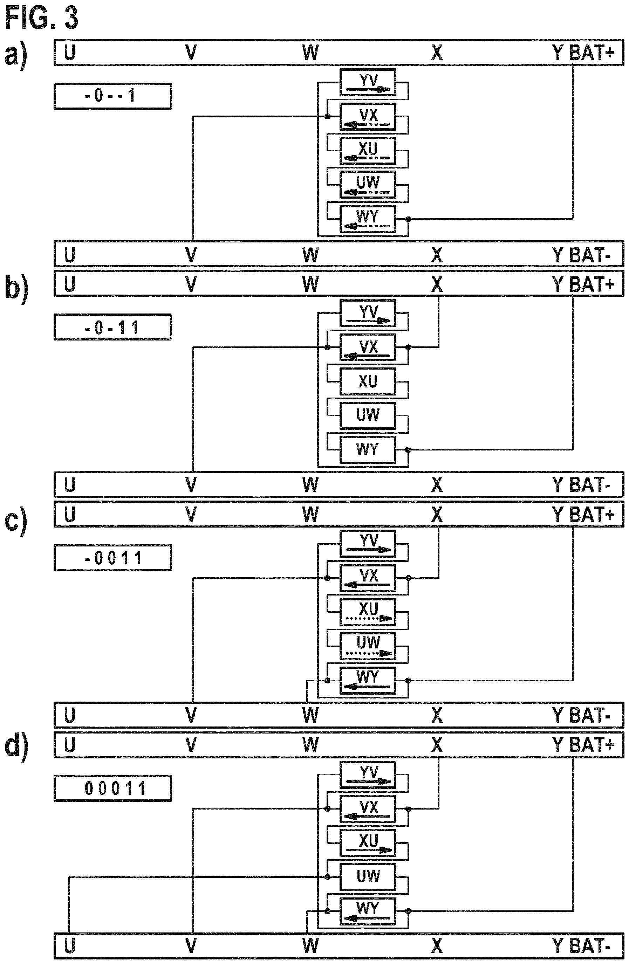

Die Figur 3 zeigt den Zusammenhang verschiedener Ansteuermuster mit dem jeweils resultierenden Anlaufstrom. Die Drudenfußverschaltung ist dabei aufgewickelt durch die einzelnen Strangwiderstände dargestellt. Dabei ist in der Figur 3a das Ansteuermuster "- 0 - - 1" veranschaulicht. Phase ,Y' ist nach Bat+ durchgesteuert, Phase ,V' nach Bat-. Man erkennt, dass es zu einer Parallelschaltung von einem Strangwiderstand und vier hintereinandergeschalteten Widerständen kommt. Das Ansteuermuster "- 0 - - 1" liegt in der Figur 2 auf dem zweiten Kreis von innen auf der rechten Seite. Durch eine Veränderung des Ansteuermusters auf - - 0 - 1" kann der Magnetfeldzeiger vektoriell weitergedreht werden.

In der Figur 3b wird das Ansteuermuster -0-11, in der Figur 3c das Ansteuermuster -0011 und in der Figur 3d das Ansteuermuster 00011 gezeigt.

Damit ist erkennbar, dass durch sequentielle Nutzung der Ansteuermuster auf einem Kreis, wie er in der Figur 2 dargestellt ist, ein rotierender Magnetfeldvektor einstellbar ist. Je nach verwendetem Ansteuermuster kann durch einen Übergang auf einen weiter innen oder weiter außen liegenden Kreis die Stromhöhe eingestellt werden.

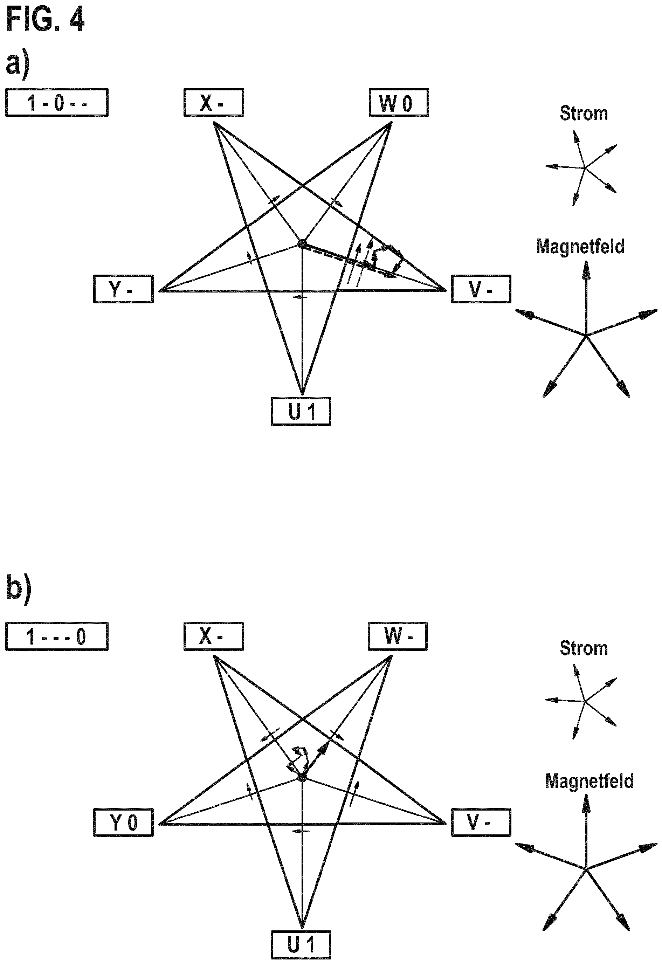

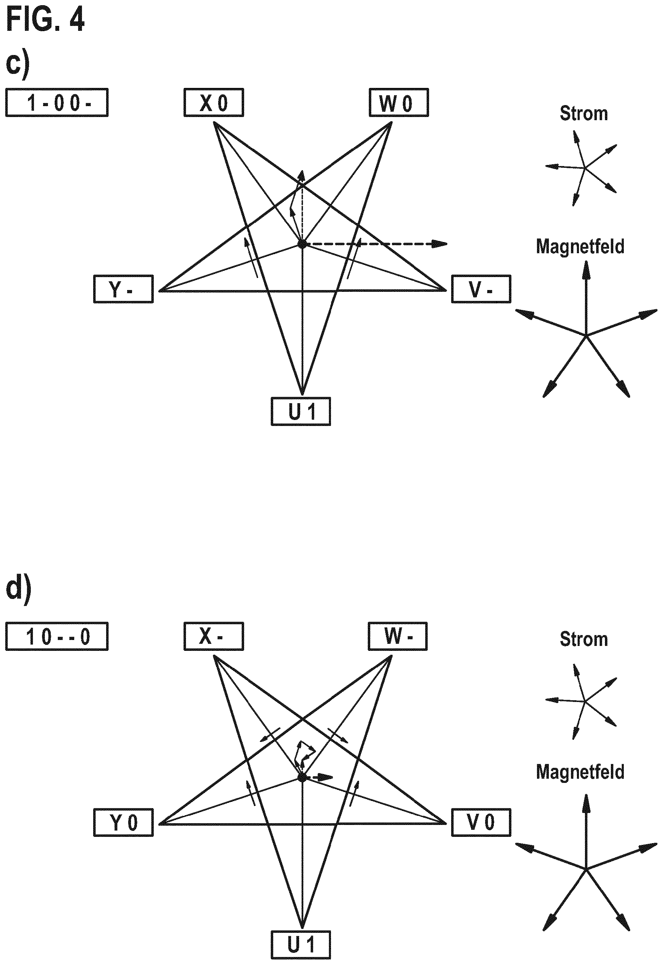

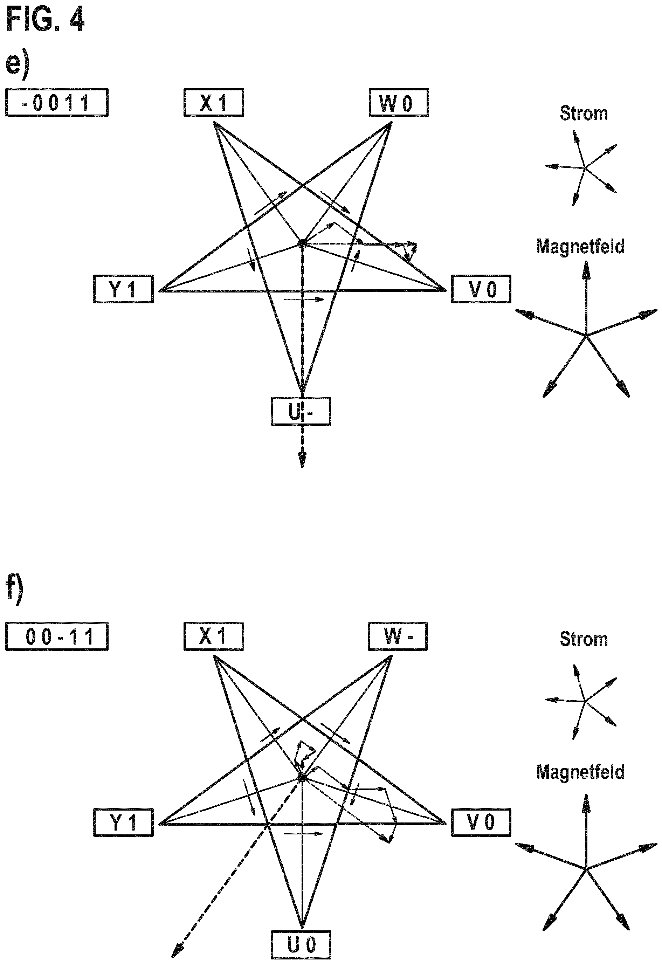

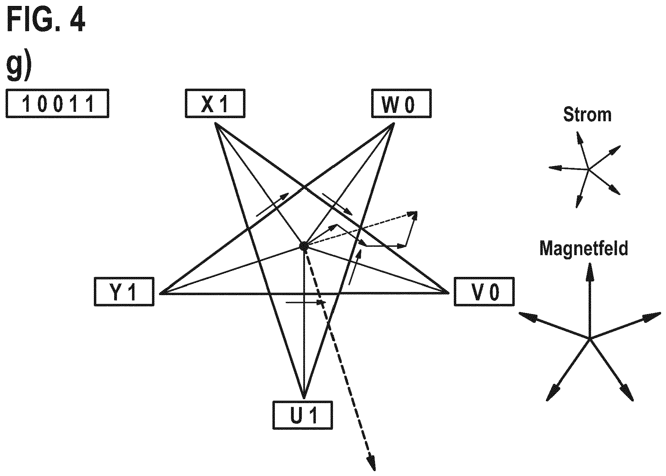

Die Figur 4 zeigt mehrere Skizzen zur Veranschaulichung von Ansteuermustern mit resultierenden Strom- und Magnetvektoren bei fünfphasigen Systemen. Dabei ist in der Figur 4a eine Grundansteuerung mit einer 72°-Blockkommutierung, in der Figur 4b eine 72°-Blockkommutierung mit Stromreduzierung, in der Figur 4c eine Grundansteuerung mit einer 108°-Blockkommutierung, in der Figur 4d eine ineffektive Ansteuerung mit einer 108°-Blockkommutierung und einer Stromreduzierung, in der Figur 4e eine Grundansteuerung mit einer 144°-Blockkommutierung, in der Figur 4f eine Ansteuerung mit einer 144°-Blockkommutierung und in der Figur 4g eine Grundansteuerung mit einer 180°-Blockkommutierung gezeigt.

Beispielsweise zeigt Figur 4a eine Ansteuerung, wie sie im Hinblick auf die resultierende Amplitude einer Ansteuerung gemäß Figur 3a entspricht. So ist aus Figur 2 ersichtlich, dass die beiden in den Figuren 3a und 4a gezeigten Ansteuermuster auf dem selben Kreis liegen. Beispielhaft ist in der Figur 4a durch dünne Pfeile entsprechender Längen gezeigt, welche Ströme sich einstellen. Die zugehörigen Magnetfelder, die in der Figur 4a durch dicke Pfeile veranschaulicht sind, stehen jeweils senkrecht auf den entsprechenden Strömen und addieren sich vektoriell zu einem resultierenden Magnetfeldvektor, der in der Figur 4a mit einer dicken gepunkteten Linie dargestellt ist. Die Gesamtansicht der resultierenden Magnetfeldvektoren ist in der Figur 2 dargestellt.

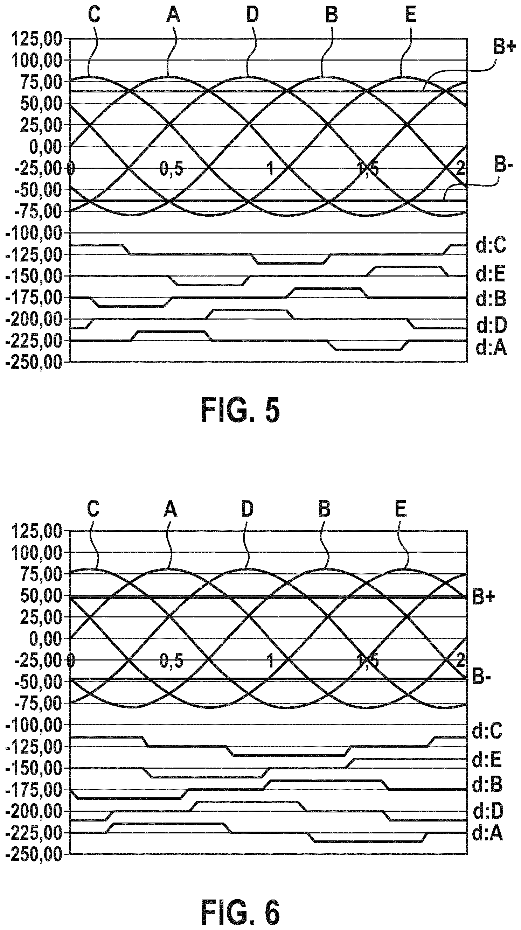

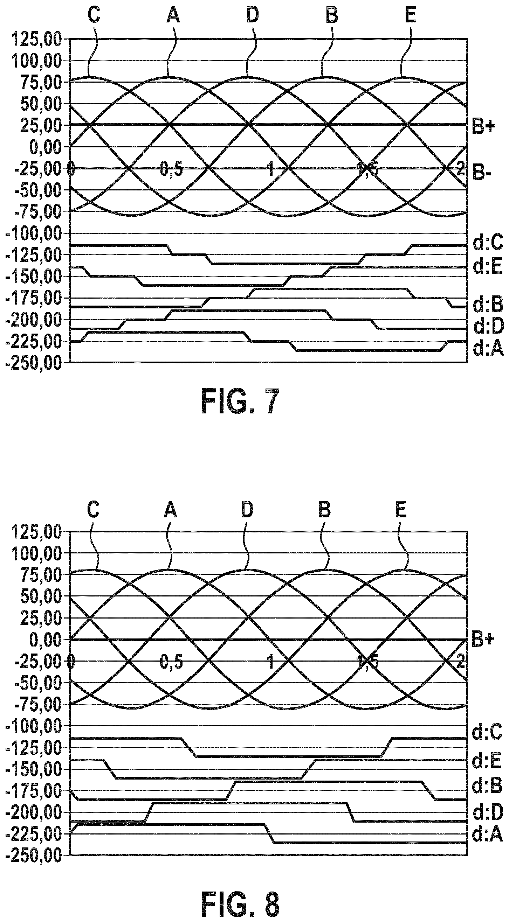

Die Figur 5 zeigt in einem Winkeldiagramm ein Ansteuermuster bei einer 72°-Blockkommutierung. Hierbei ist die Abszisse die aktuelle Winkelposition des Läufers, wobei eine elektrische Umdrehung (2 Pi) dargestellt ist. Die Ordinate zeigt den prinzipiellen Verlauf der Leerlaufspannung bei einer 5-phasigen Maschine. Im unteren Diagramm sind die jeweiligen Schaltzustände schematisch aufgetragen, wobei die 3 Schalterzustände ,High', 'Low' und ,Neutral' vorkommen. Aus dem Diagramm ist ersichtlich, dass bei einer 72°-Blockkommutierung die beiden Schalter einer Phase für jeweils 72°, also 1/5 des Gesamtumlaufs, aktiv geschaltet werden. Die Figur 6 zeigt ein Ansteuermuster bei einer 108°-Blockkommutierung, die Figur 7 ein Ansteuermuster bei einer 144°-Blockkommutierung und die Figur 8 ein Ansteuermuster bei einer 180°-Blockkommutierung.

Bei dem Verfahren gemäß der Erfindung ist neben dem Anlaufstrom auch das Anfahrmoment reduziert. Eine weitere Ausführungsform der Erfindung besteht darin, das Verfahren gemäß der Erfindung in Abhängigkeit vom Betriebszustand des Kraftfahrzeugs, innerhalb dessen die Maschine angeordnet ist, aktivierbar und/oder deaktivierbar auszugestalten. Insbesondere besteht die Möglichkeit, im Falle eines Fahrzeugkaltstartes beim Vorliegen einer tiefen Umgebungstemperatur von einer Verwendung des beanspruchten Verfahrens abzusehen und stattdessen den Fahrzeugstart konventionell vorzunehmen. Des Weiteren besteht die Möglichkeit, das Verfahren gemäß der Erfindung im Falle eines Warmstarts grundsätzlich zu aktivieren.

Ein Verfahren gemäß der Erfindung ist insbesondere einsetzbar beim Anlaufen von mit Blockkommutierung betriebenen mehrphasigen Maschinen, um den Anlaufstrom zu reduzieren. Vor allem eignet sich das beanspruchte Verfahren zu einer Verwendung im Zusammenhang mit riemengetriebenen Startergeneratoren und mit integrierten Startergeneratoren. Eine vorteilhafte Weiterbildung besteht darin, einen Auslauf der Maschine derart zu steuern, dass der Läufer der Maschine in einer zu einem Neustart geeigneten Winkelposition zum Stehen kommt.

Vorstehend wurde stets davon ausgegangen, dass die Läuferdrehzahl ermittelt wird und beim Vorliegen einer Läuferdrehzahl, die kleiner als ein vorgegebener Schwellenwert ist, die erfindungsgemäße Ansteuerung der Schalter vorgenommen wird. Alternativ dazu kann die erfindungsgemäße Ansteuerung der Schalter auch in Abhängigkeit vom gemessenen Ständerstrom aktiviert oder deaktiviert werden.

Bei der vorstehend beschriebenen Erfindung erfolgt nach alledem eine Regelung des Stromes im Anlauf von elektrischen Motoren, deren Phasenzahl größer ist als 3, durch eine gestufte Anpassung des Blockkommutierungswinkels (Unterspannungsbegrenzung). Des Weiteren erfolgt eine Regelung des Stromes bei einem Startabbruch von elektrischen Motoren, deren Phasenzahl größer als 3 ist, durch eine gestufte Anpassung des Blockkommutierungswinkels (Überspannungsbegrenzung). Ferner erfolgt eine Regelung des Abgabedrehmoments von elektrischen Motoren, deren Phasenzahl größer als 3 ist, durch eine gestufte Anpassung des Blockkommutierungswinkels (Wirkungsgraderhöhung bei gedrosselter Maschine). Ferner erfolgt eine Verwendung der Erfindung bei riemengetriebenen Startergeneratoren zu einer Begrenzung der Anlaufströme, wobei diese Generatoren mit Blockkommutierung arbeiten und fünf oder mehr Phasen aufweisen.

Die Vorteile der Erfindung bestehen nach alledem in einer Reduzierung des Anlaufstroms, einer Reduzierung des Bordnetzspannungseinbruchs im Falle einer Verwendung der Erfindung bei riemengetriebenen Startergeneratoren (Vermeidung eines Unterspannungs-Resets aller ECUs), einer Reduzierung und Beherrschung des Anfahrmoments, einer Reduzierung der Riemenbelastung bzw. des mechanischen Übertragungssystems im Anfahrtzeitpunkt, einer Reduzierung der thermischen Belastung der Endstufen (Bondbelastung), einer Begrenzung des Temperaturhubs des Lotes (Lotdegradation), einer Verkleinerung und Kostenreduktion der benötigten Endstufen, einer Vermeidung lückender Ströme, einer Verlängerung der Endstufen-Lebensdauer aufgrund einer gleichmäßigeren thermischen Belastung, Vorteilen beim Umschalten zwischen den einzelnen Ansteuermustern, einer Wirkungsgradsteigerung bei gedrosselter Maschine (Boosten mit verringerter Leistung), einer Geschwindigkeitsregelung beim Kriechen, einer Drehzahlbegrenzung beim Komfortstart), einem Überspannungsschutz im Falle eines Startabbruches (MOSFET-Schutz vor einem Avalanche-Durchbruch), einem Logikschutz vor Transienten und einer Begrenzung des Ladestroms bei Keramikkondensator, Folienkondensator und Elektrolytkondensator.

## Patentansprüche

1. Verfahren zur Stromregelung einer mit Blockkommutierung betriebenen mehrphasigen Maschine, welche Phasenwicklungen und pro Phase einen Highside-Schalter und einen Lowside-Schalter aufweist, **dadurch gekennzeichnet, dass** zur Stromregelung die Ansteuerung der Schalter (S1-S10) mittels eines Ansteuerschemas erfolgt, durch das eine gestufte Anpassung des Blockkommutierungswinkels vorgenommen wird, indem in Abhängigkeit vom jeweiligen Betriebspunkt ein Ansteuerschema mit einer Parallelschaltung von Ständerwicklungen (1-5) oder mit einer Hintereinanderschaltung von Ständerwicklungen (1-5) verwendet wird, wobei die Phasenzahl der mehrphasigen Maschine größer als 3 ist.

2. Verfahren nach Anspruch 1, **dadurch gekennzeichnet, dass** die Ansteuerung der Schalter (S1-S10) in Abhängigkeit von der Läuferposition nachgeführt wird, um ein magnetisches Drehfeld zu erzeugen.

3. Verfahren nach einem der vorhergehenden Ansprüche, **dadurch gekennzeichnet, dass** die Stromregelung während des Anlaufs der elektrischen Maschine erfolgt.

4. Verfahren nach Anspruch 3, **dadurch gekennzeichnet, dass** die Drehzahl des Läufers der Maschine ermittelt wird und beim Vorliegen einer Drehzahl, die kleiner ist als ein vorgegebener Schwellenwert, die Stromregelung vorgenommen wird.

5. Verfahren nach Anspruch 3, **dadurch gekennzeichnet, dass** der Ständerstrom gemessen wird und abhängig vom gemessenen Ständerstrom das Verfahren aktiviert oder deaktiviert wird.

6. Verfahren nach einem der vorhergehenden Ansprüche, **dadurch gekennzeichnet, dass** die Ansteuerdauer der Schalter (S1-S10) variiert wird.

7. Verfahren nach einem der vorhergehenden Ansprüche, **dadurch gekennzeichnet, dass** die Pausen zwischen aufeinanderfolgenden Ansteuervorgängen der Schalter (S1-S10) variiert werden.

8. Verfahren nach einem der vorhergehenden Ansprüche, **dadurch gekennzeichnet, dass** es in Abhängigkeit vom Betriebszustand eines Kraftfahrzeugs, innerhalb dessen die Maschine angeordnet ist, aktiviert und/oder deaktiviert wird.

9. Verfahren nach Anspruch 8, **dadurch gekennzeichnet, dass** es im Falle eines Fahrzeugstarts bei tiefen Temperaturen deaktiviert wird.

10. Verfahren nach Anspruch 8 oder 9, **dadurch gekennzeichnet, dass** es im Falle eines Warmstarts des Fahrzeugs aktiviert wird.

## Claims

1. Method for controlling the current of a multiphase machine which is operated with block commutation and has phase windings and a high-side switch and a lowside switch for each phase, **characterized in that**, in order to control the current, the switches (S1-S10) are driven by means of a drive scheme, as a result of which the block commutation angle is adapted in a stepped manner by using a drive scheme with a parallel connection of stator windings (1-5) or with a series connection of stator windings (1-5) depending on the respective operating point, wherein the number of phases of the multiphase machine is greater than 3.

2. Method according to Claim 1, **characterized in that** the driving of the switches (S1-S10) is tracked on the basis of the rotor position in order to generate a rotating magnetic field.

3. Method according to one of the preceding claims, **characterized in that** the current is controlled during the start-up of the electrical machine.

4. Method according to Claim 3, **characterized in that** the rotational speed of the rotor of the machine is determined and the current is controlled if there is a rotational speed which is less than a predefined threshold value.

5. Method according to Claim 3, **characterized in that** the stator current is measured and the method is activated or deactivated depending on the measured stator current.

6. Method according to one of the preceding claims, **characterized in that** the driving duration of the switches (S1-S10) is varied.

7. Method according to one of the preceding claims, **characterized in that** the pauses between successive drive operations of the switches (S1-S10) are varied.

8. Method according to one of the preceding claims, **characterized in that** the method is activated and/or deactivated depending on the operating state of a motor vehicle within which the machine is arranged.

9. Method according to Claim 8, **characterized in that** the method is deactivated in the event of a vehicle start at low temperatures.

10. Method according to Claim 8 or 9, **characterized in that** the method is activated in the event of a warm start of the vehicle.

## Revendications

1. Procédé de régulation du courant d'une machine multiphasée fonctionnant avec commutation en bloc, laquelle possède des enroulements de phase et, par phase, un commutateur côté haut et un commutateur côté bas, **caractérisé en ce que** pour la régulation du courant, l'attaque des commutateurs (S1-S10) s'effectue au moyen d'un schéma d'attaque par lequel est réalisée une adaptation graduelle de l'angle de commutation en bloc en utilisant, en fonction du point de fonctionnement respectif, un schéma d'attaque avec un branchement en parallèle des enroulements de stator (1-5) ou avec un branchement en série des enroulements de stator (1-5), le nombre de phases de la machine multiphasée étant supérieur à 3.

2. Procédé selon la revendication 1, **caractérisé en ce que** l'attaque des commutateurs (S1-S10) est asservie en fonction de la position du rotor en vue de générer un champ tournant magnétique.

3. Procédé selon l'une des revendications précédentes, **caractérisé en ce que** la régulation du courant est effectuée pendant le démarrage de la machine électrique.

4. Procédé selon la revendication 3, **caractérisé en ce que** la vitesse de rotation du rotor de la machine est déterminée et la régulation du courant est effectuée en présence d'une vitesse de rotation qui est inférieure à une valeur de seuil prédéfinie.

5. Procédé selon la revendication 3, **caractérisé en ce que** le courant de stator est mesuré et le procédé est activé ou désactivé en fonction du courant de stator mesuré.

6. Procédé selon l'une des revendications précédentes, **caractérisé en ce que** la durée d'attaque des commutateurs (S1-S10) est modulée.

7. Procédé selon l'une des revendications précédentes, **caractérisé en ce que** les pauses entre les opérations d'attaque successives des commutateurs (S1-S10) sont modulées.

8. Procédé selon l'une des revendications précédentes, **caractérisé en ce qu'**il est activé et/ou désactivé en fonction de l'état de fonctionnement d'un véhicule automobile à l'intérieur duquel est disposée la machine.

9. Procédé selon la revendication 8, **caractérisé en ce qu'**il est désactivé dans le cas d'un démarrage du véhicule à des basses températures.

10. Procédé selon la revendication 8 ou 9, **caractérisé en ce qu'**il est activé dans le cas d'un démarrage à chaud du véhicule.
